# EUROPÄISCHE PATENTSCHRIFT

(11) **EP 4 121 725 B1**
(45) Veröffentlichungstag und Bekanntmachung des Hinweises auf die Patenterteilung: **23.10.2024**
(21) Anmeldenummer: 21709028.1
(22) Anmeldetag: 05.03.2021
(51) Int. Cl.: G01F 23/00, G01L 19/06, G01F 23/296, G01F 23/64

(54) **VERSENKBARES AUTARKES FÜLLSTANDMESSSYSTEM**
IMMERSIBLE SELF-SUFFICIENT LEVEL MEASUREMENT SYSTEM
SYSTÈME DE MESURE DE NIVEAU IMMERSIBLE AUTO-SUFFISANT

(30) Priorität: 18.03.2020 WO PCT/EP2020/057457
(43) Veröffentlichungstag der Anmeldung: 25.01.2023
(73) Patentinhaber: VEGA Grieshaber KG, 77709 Wolfach (DE)
(72) Erfinder: WELLE, Roland, 77756 Hausach (DE)
(74) Vertreter: Maiwald GmbH
(86) Internationale Anmeldenummer: PCT/EP2021/055619
(87) Internationale Veröffentlichungsnummer: WO 2021/185601

(56) Entgegenhaltungen:
- EP-A1- 2 144 044
- DE-U1- 202018 106 655
- DE-U1- 202019 001 575
- DE-U1- 29 802 236
- US-A1- 2011 277 546

## Beschreibung

### Gebiet der Erfindung

Die Erfindung betrifft die Prozessmesstechnik und die Prozessautomatisierung im industriellen Umfeld. Insbesondere betrifft die Erfindung einen autarken Sensor, die Verwendung eines autarken Sensors zum Detektieren eines Füllstands, eines Grenzstands oder eines Drucks zumindest eines Mediums in einem Transportbehälter, ein autarkes Füllstand-, Grenzstand- oder Druckmesssystem und die Verwendung eines Füllstand-, Grenzstand- oder Druckmesssystems in einem Transportbehälter. Des Weiteren betrifft die Erfindung das Verfahren zum Detektieren eines Füllstands oder eines Grenzstands oder eines Drucks zumindest eines Mediums in einem Transportbehälter, ein Programmelement und ein computerlesbares Medium.

DE 20 2019 001575 U1 beschreibt ein eigenständiges Füllstandmesssystem zur Füllstanderkennung, wobei in ein flüssigkeitsdichtes Gehäuse eine Mess- und Auswerteeinrichtung mit einem elektrischen Energiespeicher so eingebracht ist, dass es ortsunabhängig und ohne mechanische und ohne elektrische Verbindung in die Flüssigkeit eines beliebigen Flüssigkeitsbehälter gelegt werden kann und dort bei Bedarf mittels Ultraschall durch die Wand des Gehäuses den Abstand von Sensor und Flüssigkeitspegel im Behälter misst und das Messergebnis über ein Kommunikationsmodul an eine Kommunikationseinrichtung drahtlos weiterleitet.

DE 20 2018 106655 U1 beschreibt eine Füllstandermittlungsvorrichtung, die ein Füllstandermittlungsmittel, eingerichtet zum Ermitteln eines Füllstands eines Füllguts in einem Behälter und zum Senden einer Füllstandinformation, eine Verarbeitungseinheit, eingerichtet zum Verarbeiten zumindest der Füllstandinformation, und eine Informationsübermittlungseinheit, eingerichtet zum drahtlosen wahlweisen Übermitteln zumindest der Füllstandinformation an einen externen Empfänger, umfasst.

US 2011/277546 A1 beschreibt ein Tankfüllstandüberwachungssystem, welches mehrere Auftriebssensorknoten umfasst, die entlang einer Linie in Reihe geschaltet sind. Die Auftriebssensorknoten sind konfiguriert, um entlang der Linie in Reihe zu hängen, und jeder der Auftriebssensorknoten ist konfiguriert, beim Schwimmen auf einer Flüssigkeitsoberfläche anzuzeigen. Das Tankfüllstandüberwachungssystem umfasst weiterhin einen Steuerknoten, der an dem Tank angebracht und mit einem ersten der Auftriebssensorknoten gekoppelt ist und eingerichtet ist, um die Auftriebssensorknoten zu überwachen.

EP 2 144 044 A1 beschreibt ein System zur Fernübertragung von Informationen, die zumindest einen Parameter eines in zumindest einem Reservoir enthaltenen Fluides angeben, an einen entfernten Benutzerstandort außerhalb des Reservoirs. Das System umfasst ein Sensormittel, das in das in einem Gehäuse gekapselten Fluid eintauchbar ist, zum Erfassen zumindest eines Parameters und zum Bereitstellen eines die Informationen repräsentierenden Sensorsignals und ein Kommunikationsmittel zur drahtlosen Übertragung des Sensorsignals an den entfernten Benutzerstandort außerhalb des Reservoirs. Das Gehäuse und das zumindest eine gekapselte Sensormittel und das zumindest eine gekapselte erste Sender- und/oder Empfängerteil weisen zusammen eine Dichte auf, die höher ist als die Dichte des Fluides in dem Reservoir.

DE 298 02 236 U1 beschreibt eine Bestattungsvorrichtung für Seebestattungen und umfasst keine Sensoreinrichtung zur Füllstandmessung in einem Transportbehälter.

### Technischer Hintergrund

Elektronische Grenzstandsensoren, Füllstandsensoren oder Drucksensoren sind heute weit verbreitet und können autark eingerichtet sein. Hierfür weisen sie eine interne Energieversorgung auf, welche sie von einer externen Energieversorgung unabhängig macht. Zur Kommunikation kann insbesondere eine drahtlose Kommunikationsschnittstelle vorgesehen sein, beispielsweise in Form einer WLAN-Schnittstelle oder einer Bluetooth-Schnittstelle.

Die Grenzstandsensoren, Drucksensoren oder Füllstandsensoren sind typischerweise an einer Behälteröffnung oder der Behälterwand angebracht. Sie können sich aber auch außerhalb des Behälters befinden, insbesondere wenn es sich um einen Kunststoffbehälter handelt, beispielsweise einen IBC-Behälter.

Radarsensoren, die zur Grenzstands-, Füllstands oder Druckbestimmung eingesetzt werden, können das Sendesignal durch die Wand des Kunststoffbehälters hindurchstrahlen und den berechneten Messwert dann drahtlos an eine Cloud oder einen externen Server übermitteln.

Bekannte, autark arbeitende Füllstandsensoren werden in zunehmendem Maße zur Überwachung des Füllstandes und in mobilen, transportablen Behältern eingesetzt. Die bislang genutzten Ausführungsformen basieren in der Mehrzahl auf einem radarbasierten Distanzsensor, welcher durch die Behälterwand hindurch von außen den Füllstand in einem Behälter erfassen und über eine drahtlose Kommunikationseinrichtung in eine Cloud übertragen kann. Für die bislang verfügbaren Sensoren ist jedoch eine mechanische Befestigung am Behälter häufig notwendig. Da die Vielzahl existierender, transportabler Behälter keine spezialisierten Befestigungsvorrichtungen zur Aufnahme eines Füllstandsensors aufweisen, erfolgt die Montage in aller Regel durch ein Festkleben, Festklemmen oder Festbinden am jeweiligen Behälter.

### Zusammenfassung

Es ist eine Aufgabe der vorliegenden Erfindung, die Bestimmung von Grenzständen, Drücken oder Füllständen in einem Prozessbehälter zu vereinfachen.

Diese Aufgabe wird durch die Merkmale des unabhängigen Patentanspruchs gelöst.

Weiterbildungen der Erfindung ergeben sich aus den abhängigen Patentansprüchen und der folgenden Beschreibung von Ausführungsformen.

Ein erster Aspekt der vorliegenden Offenbarung betrifft einen autarken Sensor, der zum Detektieren eines Füllstands oder eines Grenzstands oder eines Drucks zumindest eines Mediums in einem Transportbehälter eingerichtet ist. Der autarke Sensor weist ein geschlossenes Gehäuse und eine Sensorelementeanordnung mit einem oder mehreren Sensorelementen auf. Das geschlossene Gehäuse ist zum Untertauchen in dem zumindest einen Medium eingerichtet.

Die einen oder mehreren Sensorelemente sind in oder an dem Gehäuse angeordnet. Der Sensor ist zum Aufliegen auf dem Boden des Behälters während der Messung ausgeführt, ohne Befestigung an dem Behälter.

Der autarke Sensor kann so ausgeführt sein, dass der Sensor durch eine Behälteröffnung in den Behälter eingebracht oder eingeworfen werden kann und unter dem Einfluss der Schwerkraft in dem zu messenden Medium einsinken kann. In anderen Worten kann der autarken Sensor eingerichtet sein, während zumindest einer Betriebsphase vollständig von zumindest einem der zumindest einen Medien innerhalb des Behälters umgebend zu sein. Wenn der Sensor den Boden des Behälters erreicht, führt seine Form und Gewichtsverteilung dazu, dass der Sensor eine Standposition einnimmt, in welcher zumindest eines der Sensorelemente ungehindert von der Behälterwand messen kann. Beispielsweise ist die Form und Gewichtsverteilung derart ausgeführt, dass der Sensor, beispielsweise in Form eines Stehaufmännchens, stets aufrecht stehen kann. Durch die Positionierung des autarken Sensors innerhalb des Behälters kann eine sehr einfache Art der Montage bereitgestellt werden, wobei gleichzeitig ein unkontrolliertes Ablösen während eines Transportes zuverlässig verhindert werden kann.

Der autarke Sensor kann beispielsweise zum Detektieren einer Flüssigkeit als eines Mediums oder eines Füllguts eingerichtet sein. Alternativ kann es auch vorgesehen sein, dass es sich bei dem Medium um ein Schüttgut handeln kann. Somit kann der autarke Sensor nach erfolgter Installation innerhalb des Behälters nach und nach vom Schüttgut überdeckt werden und während der Messung den Messwert bzw. die Messwerte durch das Schüttgutmedium hindurch drahtlos übertragen kann.

Das Gehäuse kann dazu eingerichtet sein, ein Eindringen des Mediums in das Innere des autarken Sensors zu verhindern.

Der autarke Sensor kann in einem Transportbehälter eingesetzt werden. Beispielsweise kann ein Transportbehälter als einer der am meisten verwendeten Behältertypen ein sogenannter Intermediate Bulk Container sein, der kurz als IBC-Behälter genannt ist. Alternativ kann der Einsatz des autarken Sensors auch in anderen Behältern, beispielsweise in einem metallischen Behälter, möglich sein.

Gemäß einer weiteren Ausführungsform liegt die Dichte des Sensors zwischen der Dichte von Wasser und der Dichte von einem Öl.

Bei dem Mediengemisch kann es sich um eine heterogene Lösung handeln, die aus mindestens zwei Flüssigkeiten bzw. zwei Medien, beispielsweise einem wasserbasierenden Medium wie Wasser und einem Kohlenwasserstoff wie ein Öl, in klar abgegrenzten Phasen bestehen. Dadurch kann sich ein Multi-Schicht-Lösungssystem mit einer Trennschicht zur Abgrenzung der unterschiedlichen Medien bilden. Alternativ kann das Mediengemisch zwei Schüttgüter mit einer Trennschicht aufweisen.

Gemäß einer weiteren Ausführungsform weisen die Sensorelementeanordnung zwei Sensorelemente auf, die gegenüber voneinander angeordnet sind.

Gemäß einer weiteren Ausführungsform sind die beiden Sensorelemente ein erstes Drucksensorelement und ein zweites Drucksensorelement. Das erste Drucksensorelement ist zum Ermitteln eines ersten Messwertes eingerichtet und das zweite Drucksensorelement ist zum Ermitteln eines ersten Messwertes und eines zweiten Messwertes des zumindest einen Mediums eingerichtet.

Der autarke Sensor kann derart in dem Medium angeordnet sein, dass der Sensor an dem Behälterboden aufrecht stehen kann und sich das erste Drucksensorelement und das zweite Drucksensorelement jeweils auf einer unterschiedlichen Höhenlage in dem Medium befinden können. Der Höhenunterschied zwischen den ersten und zweiten Drucksensorelementen können beim Aufrechtstehen des autarken Sensors in dem Medium dem Abstand d zwischen den beiden Drucksensorelementen entsprechen.

Durch die gezielte Nutzung unterschiedlicher physikalischer Effekte kann es beispielsweise möglich sein, den Füllstand eines Mediums in einem Behälter mit dem Sensor zu erfassen, und nach außen hin unter Verwendung drahtgebundener oder auch drahtloser Kommunikationsvorrichtungen einer übergeordneten Steuerung zu übermitteln.

Gemäß einer weiteren Ausführungsform ist die Außenform des Gehäuses und die Gewichtsverteilung im autarken Sensor, insbesondere im Falle eines Grenzstandsensors oder Drucksensors, derart gestaltet, dass stets zumindest eines der Sensorelemente ungehindert von der Behälterwand im Füllgut oder Medium messen kann. Dazu kann ein Abstandsgitter außerhalb des Gehäuses oder auf der oberen Seite und/oder auf der unteren Seite an dem Gehäuse vorgesehen sein. Das Abstandsgitter kann weiterhin dazu eingerichtet sein, ein Ausschwemmen des Sensors während einer Entleerung des Behälters durch eine entsprechende Ausweitung der mechanischen Abmessungen des autarken Sensors zu verhindern und eine mögliche Verfälschung der Messwerte durch ein mögliches Aufliegen des autarken Sensors am Behälterboden unter Belastung einer der Messzellen zu verhindern. Somit kann vorteilhaft eine einfache und gleichzeitig sichere Installation oder Montage des autarken Sensors an oder in einem Behälter ermöglicht werden.

Gemäß einer weiteren Ausführungsform ist das Gehäuse kugelförmig ausgeführt.

Gemäß einer weiteren Ausführungsform befindet sich der Schwerpunkt des autarken Sensors, insbesondere des Grenzstandsensors oder Drucksensors, unterhalb des Mittelpunkts des Gehäuses.

Gemäß einer weiteren Ausführungsform weist das Gehäuse einen polygonalen Querschnitt, insbesondere einen sechseckigen oder achteckigen Querschnitt, auf.

Gemäß einer weiteren Ausführungsform weist das Gehäuse eine Einbuchtung auf, in welcher eines der Sensorelemente angeordnet ist.

Gemäß einer weiteren Ausführungsform ist das Sensorelement durch die Einbuchtung vor einer Berührung des Behälterbodens geschützt.

Gemäß einer weiteren Ausführungsform ist das Gehäuse spiegelsymmetrisch ausgebildet.

Gemäß einer weiteren Ausführungsform weist der autarke Sensor weiterhin eine Auswerteeinrichtung auf, die in dem Gehäuse angeordnet ist und zum Ermitteln eines dritten Messwertes anhand des ersten Messwertes und/oder des zweiten Messwertes eingerichtet ist.

Beispielsweise kann der erste Messwert des ersten Drucksensorelements der erste Druckwert P₁ und der zweite Messwert des zweiten Drucksensorelements der zweite Druckwert P₂ sein. Der autarke Sensor kann derart eingerichtet sein, dass die beiden Druckwerte von den beiden Drucksensorelementen an die Auswerteeinrichtung übertragen werden. Der Auswerteeinrichtung kann dazu eingerichtet sein, den dritten Messwert, beispielsweise den Füllstand, durch den Vergleich und Auswerten der ermittelten ersten und zweiten Druckwerte P₁ und P₂ nach einem Druckmessprinzip zu berechnen, weil die verwendeten Parameter, wie z.B. die Dichte ρ des Mediums, der Druck der überlagerten Atmosphäre P_{At} und der Abstand d zwischen den beiden Drucksensorelementen, bekannt sind.

Durch das Vorsehen des zweiten Drucksensorelements kann der Messfehler des autarken Sensors vorteilhaft minimiert und die Messgenauigkeit signifikant erhöht werden, indem die Auswerteeinrichtung eingerichtet sein kann, anhand der absoluten Differenz der beiden Druckwerte, welche durch das Produkt aus Erdbeschleunigung und Abstand d geteilt wird, fortlaufend die Dichte ρ des Mediums in dem Behälter zu erfassen.

Gemäß einer weiteren Ausführungsform weist der autarke Sensor weiterhin eine Kommunikationseinrichtung auf, die in dem Gehäuse angeordnet und dazu eingerichtet ist, einen ermittelten Messwert drahtlos durch das Gehäuse hindurch nach außen zu übertragen.

Gemäß einer weiteren Ausführungsform ist die Kommunikationseinrichtung dazu eingerichtet, das Funksignal mittels LPWAN oder einer Long Range Schmalbandfunktechnologie mit einer Funkfrequenz unterhalb von 1 GHz auszusenden.

Der autarke Sensor bzw. die Kommunikationseinrichtung kann dazu eingerichtet sein, das Funksignal mittels einer niederfrequenten Schmalbandfunktechnologie, wie z. B. LPWAN, oder einer Long Range Schmalbandfunktechnologie mit einer Funkfrequenz unterhalb von 1 GHz, insbesondere unterhalb von 500 MHz, auszusenden. Die niederfrequente Schmalbandfunktechnologie kann durch die Integration in kommerziell verfügbaren Halbleiterbausteinen preisgünstig und energiesparend verfügbar sein. Beispielswese kann ein LPWAN LoRa, Sigfox, NB-loT oder MIOTY sein. Es können aber auch andere Funktechnologien unterhalb von 1 GHz verwendet werden. Grundsätzlich kann die Reichweite der zuvor genannten Technologien unter dem Einfluss eines zu durchlaufenden Mediums zwischen einem Sender, wie z.B. dem autarken Sensor, innerhalb des Behälters und einem Empfänger außerhalb des Behälters, insbesondere bei dem leitfähigen Medium, massiv reduziert werden. Es ist jedoch vorgesehen sein, dass die reduzierte Reichweite immer noch ausreichen kann, eine in der Nähe des Behälters installierte Basisstation zu erreichen.

Gemäß einer weiteren Ausführungsform weist der autarke Sensor weiterhin ein Gateway auf, das dazu eingerichtet ist, an dem Behälter angeordnet zu sein und das Funksignal von der Kommunikationseinrichtung zu empfangen und an einen behälterexternen Empfänger zu übertragen.

Es kann vorgesehen sein, die Messwerte des autarken Sensors über eine Drahtloskommunikationstechnologie durch das Medium und die Behälterwandung hindurch in Richtung eines Empfängers, beispielsweise eines Gateways zu übertragen. Bedingt durch möglicherweise vorhandene Leitfähigkeiten des Mediums kann das Signal beim Durchlaufen stark abgeschwächt werden, was im Hinblick auf die kurze Distanz in dem Medium und der hohen, funktechnologisch bedingten, aber akzeptablen Abschwächung der Signale hingenommen werden kann. Es ist zu bemerken, dass eine Anwendung in einem metallischen Behälter hingegen prinzipbedingt durch die komplette Abschirmung der Funksignale nicht in Betracht gezogen werden kann.

Es kann auch vorgesehen sein, dass das Gateway beispielsweise an einem metallischen Behälter bzw. an der Behälterwand oder an dem Deckel des Behälters angeordnet oder montiert sein kann und das Funksignal von der Kommunikationseinrichtung des autarken Sensors empfangen und/oder an einen behälterexternen Empfänger weiter übertragen werden kann. Der Deckel des Behälters kann als ein Austauschdeckel ausgeführt sein. Dadurch können vorteilhaft der autarke Sensor und ein autarkes Füllstand-, Grenzstandoder Druckmesssystem, in welchem der autarke Sensor eingesetzt ist, mit dem Gateway auch bei dem metallischen Behälter angewendet werden, auch wenn der metallische Behälter aufgrund der Konstruktion oftmals nicht an beliebigen Stellen mit zusätzlichen Öffnungen ausgestattet werden kann. Somit kann es sich um ein in dem Deckel integriertes Behältergateway handeln.

Alternativ kann das Gateway interne in der Nähe der Öffnung des Behälters oder auf der Deckelinnenseite vorgesehen und dazu eingerichtet sein, das Funksignal des in dem Behälter befindlichen Sensors zu empfangen und über eine zweite Antenne, welche auf der Deckelaußenseite vorgesehen sein kann, nach außen hin weiter abzustrahlen. Im Gegensatz zu einem direkten Einbau beispielsweise eines Radarfüllstandsensors im Deckel ist es somit vorteilhaft, dass die Funktionsfähigkeit der Füllstandmessung sowohl bei dem geschlossenen Behälterdeckel als auch bei dem geöffneten Behälterdeckel gesichert werden kann. Die Füllstandmessung kann somit insbesondere während einer Befüllung oder Entleerung über einen in die Öffnung eingelegten Schlauch uneingeschränkt fortgesetzt werden.

Gemäß einer weiteren Ausführungsform weist der autarke Sensor weiterhin eine Energieversorgung auf, die in dem Gehäuse angeordnet und dazu eingerichtet ist, durch einen Zeitgeber, angeordnet in dem Gehäuse, in einem vorgegebenen Zeitabstand aktiviert zu werden.

Somit kann eine drahtlose Kommunikation zwischen dem autarken Sensor innerhalb des Behälters und einem Empfänger, der außerhalb des Behälters angeordnet ist, erfolgen. Im Vergleich zu einer drahtgebundenen Kommunikation, bei der die für die Messung erforderliche Energie stets im Einsatz stehen soll, kann mit der Verfügbarkeit weiterentwickelter, energiesparender drahtlosen Technologien in zunehmendem Umfang batteriebetriebene Sensoren zur Überwachung von Füllstand-, Grenzstand- oder Druckwerten an Bedeutung gewinnen. Besondere Vorteile ergeben sich für Anwendungen im Bereich der Prozessautomatisierung im industriellen Umfeld wie z. B. der Logistik.

Unter dem Begriff "Prozessautomatisierung im industriellen Umfeld" kann ein Teilgebiet der Technik verstanden werden, welches alle Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation. Mit Hilfe von Distanz- und Winkelsensoren werden im Bereich der Logistikautomation Abläufe innerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemeint ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Beispielsweise kann durch die fortlaufende, automatisierte Überwachung der Füllstände in mobilen Behältern und die vorzugsweise drahtlose Übertragung der Werte an eine zentrale Auswertestelle im Bereich der Warenlogistik eine standortübergreifende Bestandsverwaltung auf einfache Art und Weise realisiert werden. Unter Verwendung der erfassten Daten können in Abhängigkeit von der jeweiligen Problemstellung signifikante Kostenreduktionen erreicht werden, wenn beispielsweise die Fahrroute für Lieferfahrzeuge zur Versorgung mit Nachschub optimiert werden kann.

Der autarke Sensor kann weiterhin einen Zeitgeber, eine Logikschaltung, angeordnet zwischen dem Zeitgeber der Auswerteeinrichtung, und ein schaltendes Element, eingerichtet zum Verbinden der Energieversorgung, der Logikschaltung und der Auswerteeinrichtung, aufweisen. Darüber hinaus kann vorgesehen sein, dass eine Auswerteeinrichtung oder ein Prozessor ein Selbsthaltesignal zum Aktivieren der Energieversorgung einrichten kann.

Gemäß einer weiteren Ausführungsform weist der autarke Sensor weiterhin ein Neigungssensorelement auf, das in dem Gehäuse angeordnet und dazu eingerichtet ist, die Neigung des Füllstand- oder Grenzstandsensors oder Drucksensors zu bestimmen.

Die Auswerteeinrichtung kann dazu eingerichtet sein, insbesondere auch die von dem Neigungssensorelement ermittelte Neigung des autarken Sensors gegenüber der Lotrechten zu berücksichtigen und den Füllstand h mit höherer Genauigkeit zu ermitteln. Das Vorsehen und die Anwendung des Neigungssensorelements kann vorteilhaft sein, insbesondere wenn ein mobiler oder stationärer Behälter eine nicht eben ausgebildete Bodenfläche aufweist.

Es kann auch möglich sein, dass ein unerwünschtes Lösen des montierten Sensors beispielsweise beim Verladen eines Behälters oder während eines Transportes ereignen kann. Der IBC-Behälter ist durch eine volumen- und gewichtsoptimierte Bauweise gekennzeichnet, welche insbesondere ein Verladen mit Gabelstablern auf einem LKW ermöglichen kann. Bei den Be- und Entladevorgängen können durch Unachtsamkeit immer wieder kleinere Karambolagen entstehen, welche eine mechanische Verformung des Behälters und/oder ein Ablösen eines auf der Behälteraußenseite angebrachten Messsensors verursachen können. Dadurch kann es sein, dass der autarke Sensor nicht aufrecht, sondern schräg auf dem Behälterboden angeordnet sein kann.

Es kann auch möglich sein, dass der autarke Sensor nach Einbringen in den Behälter unter dem Einfluss der Schwerkraft weitgehend unkontrolliert in Richtung des Behälterbodens durch das Medium hindurch absinken und an einer sich zufällig ergebenden Stelle auf dem Behälterboden liegen bleiben kann. Es kann folglich nicht angenommen werden, dass der autarke Sensor in einer vordefinierten Winkellage gegenüber der Lotrechten am Behälterboden liegen bleibt. Durch die Berücksichtigung eines vierten Messwertes, der durch das Neigungssensorelement ermittelt wird und beispielsweise ein Neigungswinkel des Sensors sein kann, kann während der Messung eine Verbesserung der Messgenauigkeit oder auch ein Ausgeben eines Fehlersignals gesteuert werden.

Ein weiterer Aspekt betrifft die Verwendung eines autarken Sensors zum Detektieren eines Füllstands oder eines Grenzstands oder eines Drucks zumindest eines Mediums in einem Transportbehälter.

Gemäß einer weiteren Ausführungsform ist der Transportbehälter ein Fahrzeugtank.

Ein weiterer Aspekt betrifft die Verwendung eines autarken Sensors zum Detektieren eines Füllstands oder eines Grenzstands oder eines Drucks für die Grundwasserpegelmessung. Explizit können Anwendungen in jeglicher Form mobiler Behälter wie Kesselwägen, Tankwägen, Fässer, Tonnen, Schiffs-, Flugzeug- oder Fahrzeugtanks oder andere mobile Behältnisse im Kontext der Erfindung eingeschlossen sein.

Es kann auch vorgesehen sein, die Prinzipien der vorliegenden Erfindung im Rahmen stationär montierter Behälter vorteilhaft anzuwenden. So können sich insbesondere Vorteile bei schwierigen Montagesituationen in stark verwinkelten oder schlecht zugänglichen Behälterkonstellationen oder bei der Überwachung von Grundwasserpegeln ergeben. Auch eine Anwendung des autarken Sensors kann für stark verwinkelte, schlecht zugängliche Treibstofftanks vorteilhaft sein.

Ein weiterer Aspekt betrifft ein autarkes Füllstand-, Grenzstand- oder Druckmesssystem, das einen ersten autarken Sensor und einen zweiten autarken Sensor aufweist. Der erste autarke Sensor weist eine andere Dichte auf als der zweite autarke Sensor.

Das Gemisch kann zwei Medien, nämlich ein erstes Medium, beispielsweise ein Kohlenhydratstoff wie z.B. ein Öl mit einer ersten Dichte ρ₁ und ein zweites Medium, eine beispielsweise wasserbasierende Flüssigkeit wie z.B. Wasser, mit einer zweiten Dichte ρ₂ aufweisen. Das Wasser ist von dem Öl überlagert und ein Trennschicht befindet sich zwischen den beiden miteinander nicht mischbaren Medien.

Darüber hinaus kann das autarke Füllstand-, Grenzstand- oder Druckmesssystem in r nicht erfindungsgemäßen Ausführung derart eingerichtet sein, dass der erste autarke Sensor eine Dichte zwischen der ersten Dichte ρ₁ und der zweiten Dichte ρ₂, beispielsweise 0.9 g/cm³, aufweist, während der zweite autarke Sensor eine Dichte größer als die zweite Dichte ρ₂, beispielsweise größer als 1 g/cm³, aufweist. Mit der unterschiedlichen Dichten kann der zweite autarke Sensor während der Montage oder der Messung in dem Behälter bis auf den Behälterboden absinken, wohingegen der erste autarke Sensor auf der Trennschicht zwischen dem ersten Medium Öl und dem zweiten Medium Wasser aufschwimmen kann. Der zweite autarke Sensor kann nach den oben beschriebenen Prinzipien beispielsweise auf Basis einer oder mehrerer Druckmessungen ausgeführt sein, anhand der ersten Dichte ρ₁ des ersten Mediums den ersten Füllstand h₁ des ersten Mediums zu ermitteln, anhand der zweiten Dichte ρ₂ des zweiten Mediums den zweiten Füllstand h₂ des zweiten Mediums zu ermitteln und den beiden Füllstände drahtlos nach außen hin und/oder direkt an den zweiten autarken Sensor, der eine Auswerteeinrichtung mit einer Empfangseinheit zum Empfangen des Funksignals oder des Messwertes aus dem ersten Sensor aufweisen kann, zu versenden oder übertragen.

Es kann insbesondere ein Empfänger vorgesehen sein, der außerhalb des Behälters oder unterhalb des Behälters oder externe an dem Behälter angeordnet sein kann, um die Funksignale und die Messwerte aus dem ersten und zweiten autarken Sensoren zu empfangen.

Beispielsweise kann ein behälterexterner Empfänger als ein Auswertegerät oder als eine Cloud den Messwert bzw. den ersten Füllstand h₁ des ersten autarken Sensors empfangen und für die weitere Verarbeitung speichern. Der zweite autarke Sensor kann eingerichtet sein, diesen Messwert, nämlich den ersten Füllstand h₁, direkt von dem ersten autarken Sensor oder über dem Empfänger mittels einer weiteren Kommunikationseinrichtung zu empfangen und anhand des empfangenen Messwertes und unter Verwendung von im Vergleich zu dem ersten autarken Sensor identischen oder verschiedenartigen Messprinzipien einen zweiten Messwert, beispielsweise den zweiten Füllstand h₂, zu ermitteln. Beispielsweise können der Druckwert am Behälterboden, der zweite Füllstand h₂ bis zur Trennschicht anhand der bekannten zweiten Dichte ρ₂ des zweiten Mediums und daraus die Gesamtfüllhöhe oder der Gesamtfüllstand h ermittelt und drahtlos nach außen hin übertragen werden. Die Messwerte können von einem außen am Behälter angebrachten Empfänger oder einem externen Empfänger empfangen, weiterverarbeitet und/oder insbesondere an ein Warenwirtschaftssystem oder eine Cloud übertragen werden.

Gemäß einer weiteren Ausführungsform weist das autarke Füllstand-, Grenzstand- oder Druckmesssystem weiterhin einen Grenzstandsensor auf, der zur Befestigung seitlich an der Innenwand des Behälters und zur Ausgabe eines Warnsignals nach außen eingerichtet ist.

Der Grenzstandsensor kann beispielsweise ein Schwinggabelsensor sein, welcher über eine Magnethalterung im oberen Bereich des Behälters montiert sein kann. Der Grenzstandsensor kann weiterhin dazu eingerichtet sein, beim Erreichen des montageseitig einstellbaren Füllstandwertes h_{G} ein Alarmsignal nach außen hin bereitzustellen oder auszugeben. Die Magnethalterung kann auch bei einem konventionellen Kunststofftank verwendet werden, wenn auf der Behälteraußenseite eine entsprechend mechanisch festmontierte oder in der Höhe einstellbare Metallplatte vorgesehen sein kann.

Somit kann das autarke Füllstand-, Grenzstand- oder Druckmesssystem zur Grenzstandüberwachung verwendet werden.

Es kann an dieser Stelle darauf hingewiesen sein, dass ein autarker Sensor zum Ermitteln eines Füllstand- oder Grenzstandwerts unter Verwendung unterschiedlicher physikalischer Prinzipien eingerichtet sein kann. Denkbar können beispielsweise alternativ zu den Drucksensorelementen kapazitive oder konduktive Sensorelemente, vibronische Sensorelemente, Temperatursensorelemente oder chemische Sensorelemente wie PH-Wert- Sensorelemente vorgesehen sein.

Ein weiterer Aspekt betrifft ein Verfahren zum Detektieren eines Füllstands oder eines Grenzstands oder eines Drucks zumindest eines Mediums in einem Transportbehälter, das die folgenden Schritte aufweist: Bereitstellen und Anordnen eines autarken Sensors, der ein geschlossenes und eine Sensorelementeanordnung mit einem oder mehreren Sensorelementen aufweist, zum Aufliegen auf dem Boden des Behälters und Ausführen der Messung beim Aktivieren des autarken Sensors durch eine interne Energieversorgung in einem vorgegebenen Zeitabstand mittels eines Zeitgebers. Die Sensorelementeanordnung weist zwei Sensorelemente auf, die ein erstes Drucksensorelement und ein zweites Drucksensorelement und im dem Gehäuse des autarken Sensors gegenüber voneinander angeordnet sind.

Das Verfahren kann weiterhin die folgenden Schritte aufweisen, nämlich das Überprüfen, ob die aktuelle Zeit T eines Zeitgebers größer oder gleich der nächsten, vorab parametrierten Aufweckzeit T_{Wake} ist, wenn dies der Fall, gefolgt von dem Versorgen der Auswerteeinrichtung oder des Prozessors mit Energie und das Laden eines Programms.

Das Verfahren kann weiterhin die folgenden Schritte aufweisen, nämlich das Auslesen eines Neigungswinkels mittels eines Neigungssensorelements des autarken Sensors und das Bestimmen der Dichte ρ des umgebenden Mediums.

Gemäß einer weiteren Ausführungsform weist das Verfahren weiterhin die folgenden Schritte auf: Ermitteln eines ersten Messwertes des zumindest einen Mediums mittels des ersten Drucksensorelements, Ermitteln eines zweiten Messwertes des zumindest einen Mediums mittels des zweiten Drucksensorelements und Ermitteln eines dritten Messwertes mittels einer Auswerteeinrichtung anhand des ersten Messwertes und/oder des zweiten Messwertes.

Beispielsweise können der erste Messwert und der zweite Messwert jeweils der erste Druckwert P₁ und der zweite Druckwert P₂ sein. Ein Vergleich der ersten und zweiten Messwerte P₁ und P₂ kann erfolgen, um zu überprüft, ob der autarke Sensor aufrecht oder kopfüber steht bzw. ob das erste Drucksensorelement und das zweite Drucksensorelement auf unterschiedlichen Höhenlagen angeordnet sind bzw. ob P₁ > P₂ oder P₁ > P₂. Anhand der ersten und zweiten Messwerte wird der dritte Messwert, beispielsweise der Füllstand h, mittels einer Auswerteeinrichtung ermittelt. Im Falle von P₁ = P₂, kann vorgesehen sein, den Füllstand h des Mediums anhand eines der ersten und zweiten Druckwerte zu ermitteln. Alternativ oder zusätzlich kann vorgesehen sein, aufgrund der gleichen Höhenlagen der ersten und zweiten Drucksensorelemente keine Dichtemessung mehr auszuführen, eine Fehlermeldung auszugeben, einen zuletzt bekannten Dichtewert zu verwenden und/oder einen vorab parametrierten Dichtewert zur Bestimmung des Füllstandes h heranzuziehen.

Das Verfahren kann weiterhin die folgenden Schritte aufweisen: das Aktivieren einer Kommunikationseinrichtung, das drahtlose Übertragen des Füllstands h nach außen hin, das Übertragen den Zeitpunkt der nächsten Messung des Prozessors oder der Auswerteeinrichtung an den Zeitgeber und das Deaktivieren der Kommunikationseinrichtung.

Gefolgt wird ein schaltendes Element des autarken Sensors vom dem Prozessor wieder geöffnet, wodurch das komplette System mit Ausnahme des Zeitgebers wieder deaktiviert wird und somit den Zustand maximaler Energieeinsparung einnimmt. Hierdurch kann die Lebensdauer der Batterie oder des Akkus des autarken Sensors maximiert werden, was es insbesondere ermöglichen kann, den autarken Sensor mit einer festeingebauten Batterie, welche den Betrieb während vieler Jahre ermöglicht, auszuführen. Hierdurch können vorteilhaft die Herstellung vereinfacht, die Kosten während der Fertigung und während des Betriebes reduziert und die Dichtigkeit des Sensorgehäuses auf einfache Weise sichergestellt werden.

Ein weiterer Aspekt der Erfindung betrifft ein Programmelement, das, wenn es auf einem Prozessor eines autarken Sensors aufgeführt wird, den autarken Sensor anweist, die Schritte des oben beschriebenen Verfahrens durchzuführen.

Ein weiterer Aspekt der Erfindung betrifft ein computerlesbares Medium, auf dem ein Programmelement gespeichert ist.

Im Folgenden werden mit Verweis auf die Figuren Ausführungsformen der vorliegenden Offenbarung beschrieben. Werden in der Figurenbeschreibung die gleichen Bezugszeichen verwendet, so beschreiben diese gleiche oder ähnliche Elemente. Die Darstellungen in den Figuren sind schematisch und nicht maßstäblich.

Kurze Beschreibung der Figuren
- Fig. 1: zeigt schematisch einen autarken Sensor zur Füllstand-, Grenzstand- oder Druckmessung zumindest eines Mediums in einem Transportbehälter gemäß einer Ausführungsform.
- Fig. 2: zeigt schematisch einen Aufbau eines autarken Sensors gemäß einer Ausführungsform.
- Fig. 3: zeigt schematisch einen Aufbau eines autarken Sensors anhand einer funktionsorientierten Prinzipdarstellung in einem höheren Detailierungsgrad gemäß einer Ausführungsform.
- Fig. 4: zeigt schematisch einen autarken Sensor zur Füllstand-, Grenzstand- oder Druckmessung zumindest eines Mediums in einem Transportbehälter gemäß einer weiteren Ausführungsform.
- Fig. 5: zeigt schematisch ein autarkes Füllstand-, Grenzstand- oder Druckmesssystem zum Detektieren eines Mediumgemisches in einem Transportbehälter gemäß einer nicht erfindungsgemäßen Ausführungsform.

- Fig. 6: zeigt schematisch ein autarkes Füllstand-, Grenzstand- oder Druckmesssystem zum Detektieren zumindest eines Mediums in einem Transportbehälter gemäß einer Ausführungsform.
- Fig. 7: zeigt schematisch ein Flussdiagramm eines Verfahrens zum Detektieren eines Füllstands oder eines Grenzstands oder eines Drucks zumindest eines Mediums in einem Transportbehälter gemäß einer Ausführungsform. Detaillierte Beschreibung von Ausführungsformen

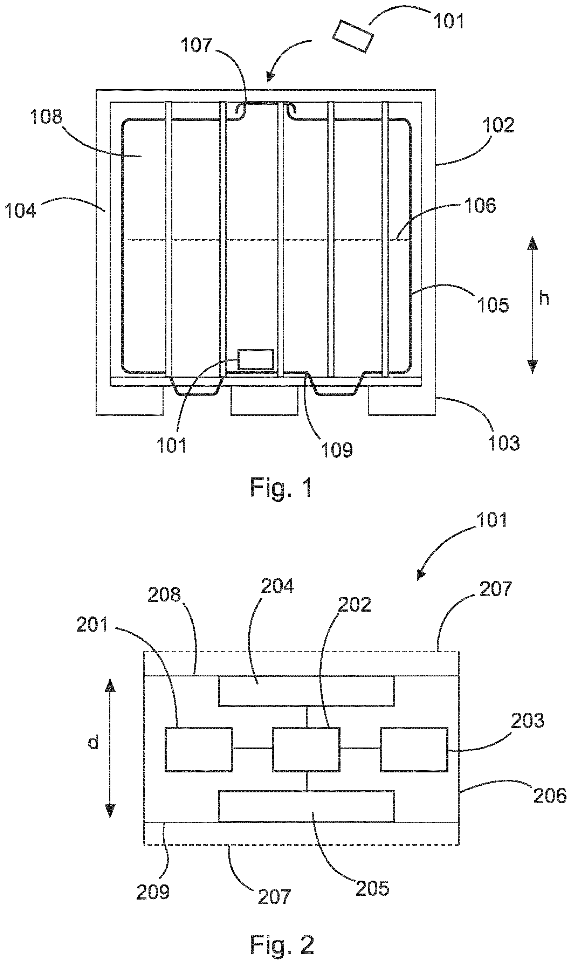

Fig. 1 zeigt einen autarken Sensor 101 zum Detektieren eines Füllstands oder eines Grenzstands oder eines Drucks zumindest eines Mediums 106 in einem Transportbehälter 102. Der autarke Sensor 101 ist zum Aufliegen auf dem Boden 109 des Behälters 102 während der Messung ausgeführt, ohne Befestigung an dem Behälter.

In Fig. 1 ist beispielsweise das Anordnen, eine Installation oder eine Montage des autarken Sensors an einem IBC-Behälter 102 gezeigt. Der gewichts-, volumen- und kostenoptimierte Behälter 102 ist insbesondere in der Distributions- und Logistikbranche sehr beliebt, und ermöglicht die einfache Versorgung von Kunden mit den unterschiedlichsten Medien. Der IBC-Behälter 102 weist eine Behälteröffnung 107, eine Palette 103, einen Metallrahmen 104 sowie eine vorzugsweise aus Kunststoff gefertigten Behälterblase 105 auf, welche das Medium 106 beinhaltet.

Der autarke Sensor 101 kann so ausgeführt sein, dass der autarke Sensor während der Installation oder der Montage durch die Deckelöffnung oder die Behälteröffnung 107 in den Behälter eingebracht oder eingeworfen werden und unter dem Einfluss der Schwerkraft in dem zu messenden Medium 106 einsenken kann. In anderen Worten kann der autarke Sensor 101 durch die Deckelöffnung derart in den Innenraum 108 des Behälters 102 abgelassen werden, dass der Sensor durch das Medium 106, das beispielsweise eine Flüssigkeit ist, hindurch in Richtung des Behälterbodens 109 sinken kann. Somit kann sich der autarke Sensor 101 nach der erfolgten Montage infolge der Schwerkraft im Wesentlichen am Behälterboden 109 befinden und somit mit der Messung, beispielsweise zur Bestimmung eines Füllstands h des Füllguts oder des Mediums 106, beginnen. Durch die Montage innerhalb des Behälters 102 kann ein unkontrolliertes Ablösen und Entfernen des autarken Sensors 101 von dem Behälter 102 grundsätzlich ausgeschlossen werden. Weist der Behälter 102 im Bereich des Behälterbodens eine Öffnung zum Entleeren auf, so kann vorgesehen sein, die mechanischen Konturen und Abmessungen des autarken Sensors 101 derart zu gestalten, dass ein Verschließen der Behälteröffnung oder ein Ausschwemmen während einer Entleerung verhindert werden kann.

Darüber hinaus zeigt Fig. 2 schematisch den grundsätzlichen Aufbau des autarken Sensors 101, der ein geschlossenes Gehäuse 206, welches zum Untertauchen in dem zumindest einen Medium 106 eingerichtet ist, und eine Sensorelementeanordnung mit einem oder mehreren Sensorelementen 204, 205, die in oder an dem Gehäuse 206 angeordnet sind, aufweist.

Das Gehäuse 206 kann dazu eingerichtet sein, ein Eindringen des Mediums in das Innere des autarken Sensors 101 zu verhindern.

Beispielsweise zeigt Fig. 2, dass die Sensorelementeanordnung zwei Sensorelemente 204, 205, nämlich das erste Sensorelement 204 und das zweite Sensorelement 205, aufweisen, die gegenüber voneinander angeordnet sind und dazu eingerichtet sein können, eine physikalische Eigenschaft des den Sensor 101 unmittelbar und/oder im Wesentlichen vollständig umgebenden Mediums 106 zu erfassen.

Der autarke Sensor 101 weist weiterhin eine Auswerteeinrichtung 202 oder Messwertbestimmungseinrichtung auf, die im Sensor, beispielsweise in Form eines Prozessors, integriert sein und dazu eingerichtet sein kann, auf Basis der gemessenen physikalischen Eigenschaft des Mediums 106 mit der Dichte ρ durch das erste Sensorelement 204 und/oder das zweite Sensorelement 205 zumindest einen Messwert, beispielsweise eine Füllhöhe oder einen Füllstand h in dem Behälter 102 zu ermitteln.

Beispielsweise können die beiden Sensorelemente ein erstes Drucksensorelement 204 und ein zweites Drucksensorelement 205 sein, die jeweils eine erste Druckmesszelle 204 und eine zweite Druckmesszelle 205 sein können und zum Ermitteln eines ersten Messwertes und eines zweiten Messwertes des zumindest einen Mediums, beispielsweise basierend auf einem Druckmessprinzip, eingerichtet sind. Beispielsweise kann die Auswerteeinrichtung 202 im Zusammenwirken mit einer ersten Druckmesszelle 204, die auf einer ersten Oberfläche 208 des Gehäuses 206 angeordnet ist, einen ersten Messwert bzw. Druckwert P₁ ermitteln, welcher direkt von der Füllhöhe h und der Dichte ρ des Mediums 106 abhängen kann. Darüber hinaus addiert sich auf den von den vorigen Parametern abhängigen, von dem Medium 106 erzeugten hydrostatischen Druck P_{Hyd} der Druck der überlagerten Atmosphäre Pat. Abhängig von den Anforderungen an die Genauigkeit der Füllstandmessung, welche einen Fehler bis hin zu mehreren Zentimetern tolerieren kann, kann in einer Vielzahl von Fällen der überlagerte Gasdruck mit P_{At_norm} = 1013 mBar geschätzt werden. Darüber hinaus wird in dem Behälter 102 oftmals ein und dasselbe Medium 106 mit einer bekannten Dichte von einem Lieferanten zu einem Kunden befördert, was eine Vorabeingabe der Dichte vor der Montage am Sensor möglich macht. Somit können die Parameter bekannt sein und die Auswerteeinrichtung 202 kann den Füllstand h aus dem gemessenen Druck P₁ unter Subtraktion des angenommenen Atmosphärendrucks P_{At_norm} und letztlicher Division der Differenz durch das Produkt aus der Erdbeschleunigung und der vorab parametrierten Dichte ρ in guter Näherung ermitteln.

Zusätzlich kann ein zweites Drucksensorelement oder eine zweite Druckmesszelle 205 in dem autarken Sensor 101 vorgesehen sein, welche an einer der ersten Oberfläche im Wesentlichen gegenüberliegenden zweiten Oberfläche 209 des Gehäuses 206 angeordnet ist. Bedingt durch den Abstand d kann sich bei der Messung im Medium 106 unterschiedliche Druckwerte P₁ an der Messstelle des ersten Drucksensors 204 und P₂ an der Messstelle des zweiten Drucksensors 205 ergeben. Die Auswerteeinrichtung 202 kann eingerichtet sein, anhand der absoluten Differenz der beiden Druckwerte, welche durch das Produkt aus der Erdbeschleunigung und dem Abstand d geteilt wird, fortlaufend die Dichte ρ des Mediums 106 in dem Behälter 102 zu erfassen, den Fehler zu minimieren, die Messgenauigkeit zu erhöhen und somit die Messung zu optimieren.

Darüber hinaus kann der autarke Sensor 101 weiterhin ein Abstandsgitter 207 aufweisen, die außerhalb des Gehäuses 206 oder an dem Gehäuse 206 vorgesehen ist und dazu eingerichtet sein kann, ein Ausschwemmen des Sensors 101 während einer Entleerung des Behälters 102 durch eine entsprechende Ausweitung der mechanischen Abmessungen des autarken Sensors 101 zu verhindern. Ferner kann das Abstandgitter 207 eingerichtet sein, eine mögliche Verfälschung der von den Sensorelementen 204, 205 ermittelten Messwerte bzw. Druckwerte durch ein mögliches Aufliegen des autarken Sensors 101 am Behälterboden 109 unter Belastung einer der Messzellen 204, 205 zu verhindern. Somit kann vorteilhaft eine einfache und gleichzeitig sichere Installation oder Montage des autarken Sensors an oder in einem Behälter ermöglicht werden.

Des Weiteres weist der autarke Sensor 101 ein Kommunikationsmodul oder eine Kommunikationseinrichtung 203 auf, die in dem Gehäuse 206 angeordnet und dazu eingerichtet ist, einen ermittelten Messwert drahtlos durch das Gehäuse hindurch nach außen hin zu übertragen oder übermitteln.

Ferner weist der autarke Sensor 101 eine Energieversorgung 201 auf, die beispielsweise ein Energiespeicher 201 wie z.B. eine Batterie 201 oder ein Akkumulator sein kann, welcher die komplette Sensorik mit Energie versorgt. Die Energieversorgung ist in dem Gehäuse 206 angeordnet und kann dazu eingerichtet sein, mittels eines energiesparenden Moduls aktiviert zu werden.

Beispielsweise kann der ermittelte Messwert, wie z.B. der Füllstand h, über die Kommunikationseinrichtung 203 nach außen hin übermittelt oder übertragen werden, wobei die Kommunikationseinrichtung 203 in dem speziellen, energiesparenden Modul ausgeführt sein kann. Es kann vorgesehen sein, dass der autarke Sensor 101 mit einer Funktechnologie ausgerüstet sein kann, welche im Hinblick auf die Batterielebensdauer energiesparend ist, im Hinblick auf die Herstellkosten preisgünstig und im Hinblick auf die Notwendigkeit einer Durchdringung zumindest eines Mediums 106 sehr Robust in Bezug auf die akzeptable Streckendämpfung sein kann.

Der autarke Sensor 101 bzw. die Kommunikationseinrichtung 203 kann dazu eingerichtet sein, das Funksignal mittels einer niederfrequenten Schmalbandfunktechnologie, wie z. B. LPWAN, oder einer Long Range Schmalbandfunktechnologie mit einer Funkfrequenz unterhalb von 1 GHz, insbesondere unterhalb von 500 MHz, auszusenden. Die niederfrequente Schmalbandfunktechnologie kann durch die Integration in kommerziell verfügbaren Halbleiterbausteinen preisgünstig und energiesparend verfügbar sein. Beispielswese kann ein LPWAN LoRa, Sigfox, NB-loT oder MIOTY sein. Es können aber auch andere Funktechnologien unterhalb von 1GHz verwendet werden. Grundsätzlich kann die Reichweite der zuvor genannten Technologien unter dem Einfluss eines zu durchlaufenden Mediums 106 zwischen einem Sender, wie z.B. dem autarken Sensor 101, innerhalb des Behälters 102 und einem Empfänger außerhalb des Behälters, insbesondere bei dem leitfähigen Medium 106, massiv reduziert werden. Es ist jedoch vorgesehen sein, dass die reduzierte Reichweite immer noch ausreichen kann, eine in der Nähe des Behälters 102 installierte Basisstation zu erreichen.

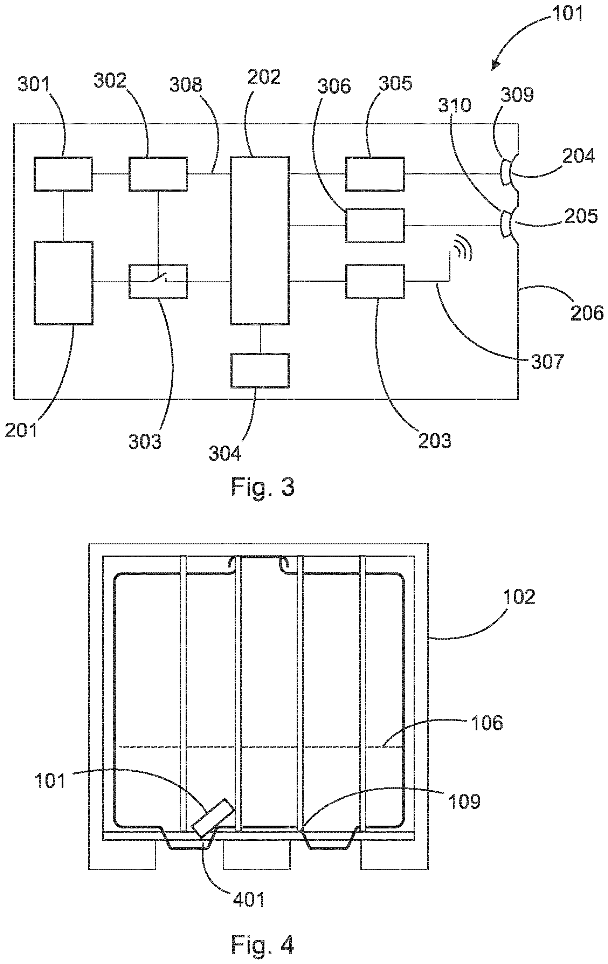

Fig. 3 zeigt weiterhin den Aufbau eines autarken Sensors 101 in Fig. 2 anhand einer funktionsorientierten Prinzipdarstellung in einem höheren Detailierungsgrad. Der autarke Sensor 101 weist neben der Energieversorgung 201 weiterhin einen Zeitgeber 301, eine Logikschaltung 302, angeordnet zwischen dem Zeitgeber 301 und der Auswerteeinrichtung 202, und ein schaltendes Element 303, eingerichtet zum Verbinden der Energieversorgung 201, der Logikschaltung 302 und der Auswerteeinrichtung 202, auf. Der Zeitgeber 301 kann in dem Gehäuse 206 angeordnet und dazu eingerichtet sein, die Energieversorgung 201 in einem vorgegebenen Zeitabstand zu aktivieren. Beispielsweise kann der Zeitgeber 301 eingerichtet sein, nach dem Ablauf von 4 Stunden, einen Schaltimpuls auszulösen, welcher von der Logikschaltung 302 auf ein schaltendes Element 303, das beispielsweise ein Relais oder eine Transistorschaltung sein kann, weitergeleitet werden.

Beispielsweise kann es vorgesehen sein, dass die Auswerteeinrichtung 202, die als ein Prozessor 202 ausgebildet sein kann, durch das Schließen oder das Einschalten des schaltenden Elements 303 mit der Energie versorgt werden und ein Ablaufprogramm zur Durchführung einer Messung starten kann. Darüber hinaus kann vorgesehen sein, dass der Prozessor 202 ein Selbsthaltesignal 308 aktivieren kann. Ferner kann vorgesehen sein, dass während des Programmablaufes die Auswerteeinrichtung 202 zumindest eine physikalische Messgröße, welche ein dritter Messwert sein kann. Der dritte Messwert kann beispielsweise ein Druckwert P₁ sein, in Abhängigkeit von dem umgebenden Medium 106 stehen und durch den Prozessor 202 mittels Messgrößenbestimmungseinrichtungen 305, 306, beispielsweise Druckbestimmungsschaltungen 305, 306 ermittelt werden. Die Schaltungen 305, 306 können dazu eingerichtet sein, zumindest einen Druck unter Verwendung einer der ersten und zweiten Drucksensorelemente bzw. Druckmesszelle 204, 205, beispielsweise einer keramischen oder einer metallischen Druckmesszelle 204, 205 zu ermitteln. Alternativ zu Fig. 2, kann die beiden Drucksensorelemente bzw. Druckmesszelle 204, 205 seitlich auf einer gleichen Oberfläche des Gehäuses 206 angeordnet sein und sich während der Messung auf unterschiedlichen Höhen mit einem Abstand d befinden.

Zur Einsparung von Kosten und im Hinblick auf reduzierte Genauigkeitsforderungen kann auch vorgesehen sein, die Druckmesszellen 204, 205 durch besonders ausgeführte Gehäuseabschnitte, welche sich unter dem Einfluss eines externen Drucks verbiegen, auszuführen. In diesem Falle kann eine Verbiegung durch die Dehnungsmesstreifen 309, 310 erfasst werden. Es kann auch vorgesehen sein, preisgünstige Halbleiterdrucksensoren zu verwenden.

Es kann auch vorgesehen sein, dass das Sensorgehäuse 206 den autarken Sensor 101 nahtlos umgeben kann, um hermetisch gegenüber dem Medium 106 abzudichten, was zu einer besonders preisgünstigen Fertigung beitragen kann. Die Auswerteeinrichtung 202 kann eingerichtet sein, auf Basis der gemessenen physikalischen Größen, nämlich der ersten und zweiten Messwerte oder Druckwerte P₁ und P₂, einen dritten Messwert bzw. einen Füllstand h zu ermitteln.

Des Weiteren weist der autarke Sensor 101 weiterhin ein Neigungssensorelement 304 auf, das in dem Gehäuse 206 angeordnet und dazu eingerichtet ist, die Neigung des autarken Sensors zu bestimmen.

Fig. 4 zeigt, dass die Auswerteeinrichtung 202 dazu eingerichtet sein kann, insbesondere auch die von dem Neigungssensorelement 304 ermittelte Neigung des autarken Sensors 101 gegenüber der Lotrechten zu berücksichtigen und den Füllstand h mit höherer Genauigkeit zu ermitteln. Der ermittelte Füllstand h kann von der Auswerteeinrichtung 202 an die Kommunikationseinrichtung 203, beispielsweise an ein LoRa Modem 203, weitergereicht oder übertragen und unter Verwendung einer im Sensor 101 integrierten Antenne 307 drahtlos nach außen hin durch das umgebende Medium 106 hindurch in Richtung eines Empfängers abgestrahlt werden.

Das Vorsehen und die Anwendung des Neigungssensorelements 304 ist vorteilhaft, insbesondere wenn ein mobiler oder stationärer Behälter 102, wie im Fig. 4 gezeigt, eine nicht eben ausgebildete Bodenfläche 109 aufweist. Es kann möglich sein, dass der autarke Sensor 101 nach Einbringen in den Behälter 102 unter dem Einfluss der Schwerkraft weitgehend unkontrolliert in Richtung des Behälterbodens 109 durch das Medium 106 hindurch absinken und an einer sich zufällig ergebenden Stelle 401 auf dem Behälterboden 109 liegen bleiben kann. Es kann folglich nicht angenommen werden, dass der autarke Sensor 101 in einer vordefinierten Winkellage gegenüber der Lotrechten am Behälterboden liegen bleibt. Durch die Berücksichtigung eines vierten Messwertes, der durch das Neigungssensorelement 304 ermittelt wird und beispielsweise ein Neigungswinkel des Sensors ist, kann während der Messung zur Verbesserung der Messgenauigkeit ein Ausgeben eines Fehlersignals gesteuert werden. Bleibt der Sensor 101 beispielsweise auf seiner Mantelfläche liegend am Behälterboden liegen, so kann der Sensor eingerichtet sein, den Füllstand h des Mediums 106 anhand eines der ersten und zweiten Druckwerte mittels der Auswerteeinrichtung 202 zu bestimmen. Alternativ oder zusätzlich kann der Sensor eingerichtet sein, aufgrund der gleichen Höhenlage der Druckmesszellen 204, 205 keine Dichtemessung mehr auszuführen. Der Sensor kann folglich eingerichtet sein, eine Fehlermeldung auszugeben, einen zuletzt bekannten Dichtewert zu verwenden und/oder einen vorab parametrierten Dichtewert für die Bestimmung des Füllstands h heranzuziehen. Bleibt der Sensor 101 wie in Figur 4 dargestellt schräg liegen, kann die resultierende Höhendifferenz dᵣₑₛ aus dem bekannten Abstand d und dem Neigungswinkel des Sensors 101 bestimmt werden, und somit die Messgenauigkeit verbessert werden.

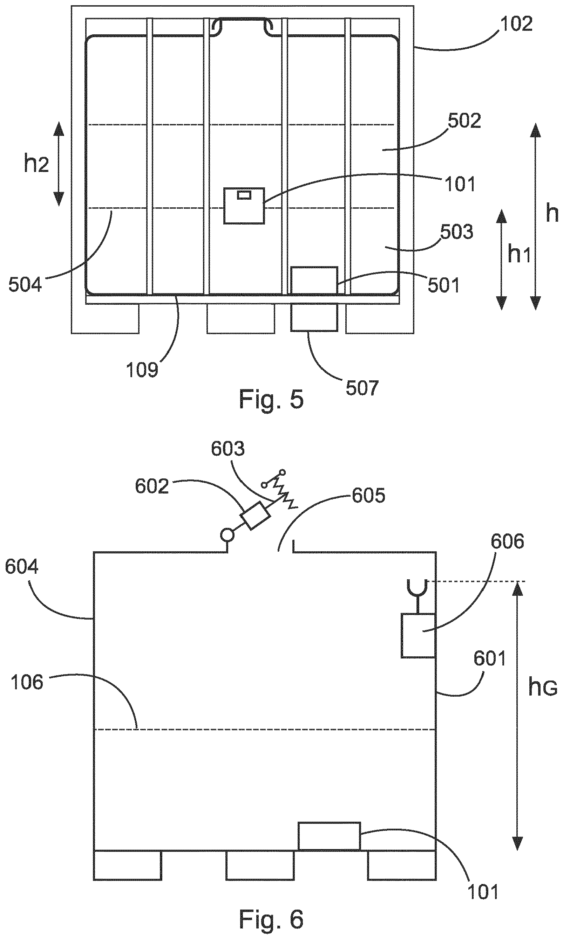

Fig. 5 zeigt ein nicht erfindungsgemäßes autarkes Füllstand-, Grenzstand- oder Druckmesssystem zum Detektieren eines Mediumgemisches in einem Transportbehälter, das zumindest zwei autarke Sensoren, nämlich einen ersten autarken Sensor 101 und einen zweiten autarken Sensor 501 aufweist. Der Behälter 102 bevorratet beispielsweise ein Mediengemisch aus zumindest zwei Medien 502, 503 mit unterschiedlichen Dichten ρ₁, ρ₂. Beispielsweise können die beiden Medien ein Kohlenwasserstoff als das erste Medium wie z.B. ein Öl 502 mit einer ersten Dichte ρ₁ und ein wasserbasierendes Medium als das zweite Medium wie z.B. Wasser 503 mit einer zweiten Dichte ρ₂ sein, wobei das Wasser 503 von dem Öl 502 überlagert ist und sich ein Trennschicht 504 zwischen den beiden miteinander nicht mischbaren Medien 502, 503 befindet.

Das autarke Füllstand-, Grenzstand- oder Druckmesssystem ist derart eingerichtet, dass der erste autarke Sensor 101 eine andere Dichte aufweist als der zweite autarke Sensor 501. Darüber hinaus kann das autarke Füllstand-, Grenzstand- oder Druckmesssystem derart eingerichtet sein, dass der erste autarke Sensor 101 eine Dichte zwischen der ersten Dichte ρ₁ und der zweiten Dichte ρ₂, beispielsweise 0.9 g/cm³, aufweist, während der zweite autarke Sensor 501 eine Dichte größer als die zweite Dichte ρ₂, beispielsweise größer als 1 g/cm³, aufweist. Mit der unterschiedlichen Dichten kann der zweite autarke Sensor 501 während der Montage oder der Messung in dem Behälter 102 bis auf den Behälterboden 109 absinken, wohingegen der erste autarke Sensors 101 auf der Trennschicht 504 zwischen dem ersten Medium Öl 502 und dem zweiten Medium Wasser 503 aufschwimmen kann. Der zweite autarke Sensor 501 kann nach den oben ausgeführten Prinzipien beispielsweise auf Basis einer oder mehrerer Druckmessungen ausgeführt sein, anhand der ersten Dichte ρ₁ des ersten Mediums 502 den ersten Füllstand h₁ des ersten Mediums 502 zu ermitteln, anhand der zweiten Dichte ρ₂ des zweiten Mediums 503 den zweiten Füllstand h₂ des zweiten Mediums 503 zu ermitteln und die beiden Füllstände drahtlos nach außen zu versenden oder übertragen.

Es kann insbesondere ein Empfänger 507 vorgesehen sein, der außerhalb des Behälters 102 oder unterhalb des Behälters oder externe an dem Behälter angeordnet sein kann, um die Funksignale und die Messwerte aus dem ersten und zweiten autarken Sensoren 101, 501 zu empfangen.

Beispielsweise kann der Empfänger 507 als ein Auswertegerät oder als eine Cloud den Messwert bzw. den ersten Füllstand h₁ des ersten autarken Sensors 101 empfangen und für die weitere Verarbeitung speichern. Es kann weiterhin vorgesehen sein, dass der zweite autarke Sensor 501 diesen Messwert, nämlich den ersten Füllstand h₁, direkt von dem ersten autarken Sensor oder über dem Empfänger 507 mittels einer weiteren Kommunikationseinrichtung (nicht dargestellten) empfangen und anhand des empfangenen Messwertes und unter Verwendung von im Vergleich zu dem ersten autarken Sensor 101 identischen oder verschiedenartigen Messprinzipien einen weiteren physikalischen Messwert ermitteln kann. Beispielsweise können der Druckwert am Behälterboden 109, anschließend anhand der bekannten zweiten Dichte ρ₂ des zweiten Mediums 503 der zweite Füllstand h₂ bis zur Trennschicht 504 und daraus der Gesamtfüllstand h ermittelt und drahtlos nach außen hin übertragen werden. Die Messwerte können von einem außen am Behälter 102 angebrachten Empfänger 507 empfangen werden, oder alternative von einem weiteren externen, hier nicht gezeigten Empfänger empfangen, weiterverarbeitet und/oder insbesondere an ein Warenwirtschaftssystem oder eine Cloud weitergeleitet werden.

Somit kann das autarke Füllstand-, Grenzstand- oder Druckmesssystem vorteilhaft zur Trennschichtmessung eines Mediengemisches in einem Transportbehälter verwendet werden. Darüber hinaus kann dadurch eine Überwachung von Trennschichten in Prozessbehältern oder eine Überwachung eines Separationsprozesses optimal durchgeführt werden.

Das Prinzip der Bereitstellung mehrerer Sensoren 101, 501 mit definierten unterschiedlichen Dichten zur Erreichung eines Aufschwimmens auf einer vordefinierten Mediengrenzschicht 504 kann prinzipiell auch auf andere Kombinationen oder in Anwendungen mit einer Vielzahl an Grenzschichten 504 verwendet werden. Es kann in Anbetracht des oben dargelegten Ausführungsbeispiels ermöglichen, auch Anwendungen mit mehreren Grenzschichten und dafür geeignete Sensoren auszurüsten.

Es kann auch vorgesehen sein, einen autarken Sensor mit einer sehr niedrigen Dichte auszugestalten, welcher zuoberst aufschwimmend die fortlaufende Ermittlung des überlagerten Gasdrucks ermöglichen kann. Wird dieser an eine Cloud und/oder an andere im jeweiligen Behälter befindlichen Sensoren 101, 501 übermittelt, so kann hierdurch die Messgenauigkeit verbessert werden.

Die bislang gezeigten Ausführungsbeispiele und Anwendungsszenarien zielen darauf ab, die Messwerte vom Sensor 101, 501 über eine Drahtloskommunikationstechnologie durch das jeweilige Medium 106, 502, 503 und die Behälterwandung 105 hindurch in Richtung eines Empfängers, beispielsweise eines Gateways zu übertragen. Bedingt durch möglicherweise vorhandene Leitfähigkeiten der Medien 106, 503 wird das Signal beim Durchlaufen derselben stark abgeschwächt, was im Hinblick auf die kurze Distanz im Medium und der hohen, funktechnologisch bedingten, aber erfindungsgemäß akzeptablen Abschwächung der Signale hingenommen werden kann. Eine Anwendung in einem metallischen Behälter 601, wie in Fig. 6 gezeigt, kann hingegen prinzipbedingt durch die komplette Abschirmung der Funksignale nicht in Betracht gezogen werden.

Fig. 6 zeigt, dass ein Gateway 602 für den autarken Sensor 101, 501 vorgesehen kann und dazu eingerichtet sein kann, an einem metallischen Behälter 601 bzw. an der Behälterwand 604 oder an dem Deckel 603 des Behälters 601 angeordnet oder montiert zu sein und das Funksignal von der Kommunikationseinrichtung 203 des autarken Sensors 101 zu empfangen und/oder an einen behälterexternen Empfänger 507 zu übertragen. Der Deckel 603 des Behälters kann als ein Austauschdeckel 603 ausgeführt sein. Vorteilhaft können somit der autarke Sensor 101, 501 und das autarke Füllstand-, Grenzstand- oder Druckmesssystem mit dem Gateway 602 auch für einen metallischen Behälter 601 angewendet werden, auch wenn der metallische Behälter 601 aufgrund der Konstruktion oftmals nicht an beliebigen Stellen mit zusätzlichen Öffnungen 605 ausgestattet werden kann. Fig. 6 zeigt ein in dem Deckel 603 integriertes Behältergateway 602, welches eingerichtet ist, die Funksignale der in dem Behälter 601 befindlichen Sensoren 101, 606 zu empfangen, und über eine zweite Antenne, welche sich auf der Deckelaußenseite befindet, nach außen hin wieder abzustrahlen.

Das Gateway 602 kann interne am Behälter, beispielsweise in der Nähe der Öffnung, oder auf der Deckelinnenseite vorgesehen sein. Im Gegensatz zu einem direkten Einbau beispielsweise eines Radarfüllstandsensors im Deckel 603 kann es somit vorteilhaft sein, dass die Funktionsfähigkeit der Füllstandmessung sowohl bei dem geschlossenen Behälterdeckel 603 als auch bei dem geöffneten Behälterdeckel 603 gesichert werden kann. Die Füllstand, Grenzstand- oder Druckmessung kann somit insbesondere während einer Befüllung oder Entleerung über einen in die Öffnung 605 eingelegten Schlauch uneingeschränkt fortgesetzt werden.

Fig. 6 zeigt weiterhin, dass ein autarke Füllstand-, Grenzstand- oder Druckmesssystem weiterhin einen Grenzstandsensor 606 aufweist, der zur Befestigung seitlich an der Innenwand des Behälters 601 und zur Ausgabe eines Warnsignals nach außen eingerichtet ist. Der Grenzstandsensor 606 kann beispielsweise ein Schwinggabelsensor 606 sein, welcher über eine Magnethalterung im oberen Bereich des Behälters 601 montiert ist und dazu eingerichtet sein kann, beim Erreichen des montageseitig einstellbaren Füllstands h_{G} ein Alarmsignal nach außen hin bereitzustellen oder auszugeben. Die gezeigte Magnethalterung kann auch bei einem konventionellen Kunststofftank verwendet werden, wenn auf der Behälteraußenseite eine entsprechend mechanisch festmontierte oder in der Höhe einstellbare Metallplatte vorgesehen ist.

Es kann an dieser Stelle darauf hingewiesen sein, dass ein autarker Sensor 101, 501 zum Ermitteln eines Füllstand- oder Grenzstands unter Verwendung unterschiedlicher physikalischer Prinzipien eingerichtet sein kann. Denkbar können beispielsweise alternativ zu den Drucksensorelementen 204, 205 als Sensorelementen der Sensorelementeanordnung kapazitive oder konduktive Sensorelemente, vibronische Sensorelemente, Temperatursensorelemente oder chemische Sensorelemente wie PH-Wert- Sensorelemente im Einsatz sein.

Es kann bei der Verwendung mehrerer autarken Sensoren 502, 503 für ein Messsystem oder auch bei der Verwendung von Behältergateways 602 vorgesehen sein, die Messzeitpunkte der in den jeweiligen Komponenten verbauten Zeitgeber 301 zu synchronisieren, sodass die an einer jeweiligen Messung beteiligten Komponenten im Wesentlichen zur gleichen Zeit aktiviert werden. Es kann in einer dem Fachmann bekannten Weise auch eine Synchronisation der Zeitgeber 301 vorgesehen sein.

Es kann auch vorgesehen sein, dass die autarken Sensoren 101, 501 eine Einrichtung zur Demontage aufweisen kann. So kann vorgesehen sein, Flächenelemente derart auszubilden, dass diese von einem Magneten, welcher beispielsweise von einem Benutzer durch die Öffnung 605 des Behälters 102, 601 eingebracht wird, erfasst werden. Durch ein Ausbringen des Servicemagneten aus dem Behälter kann somit auch der autarke Sensor 101, 501 wieder aus dem Behälter oder einer Grundwassertiefbohrung wieder entfernt werden.

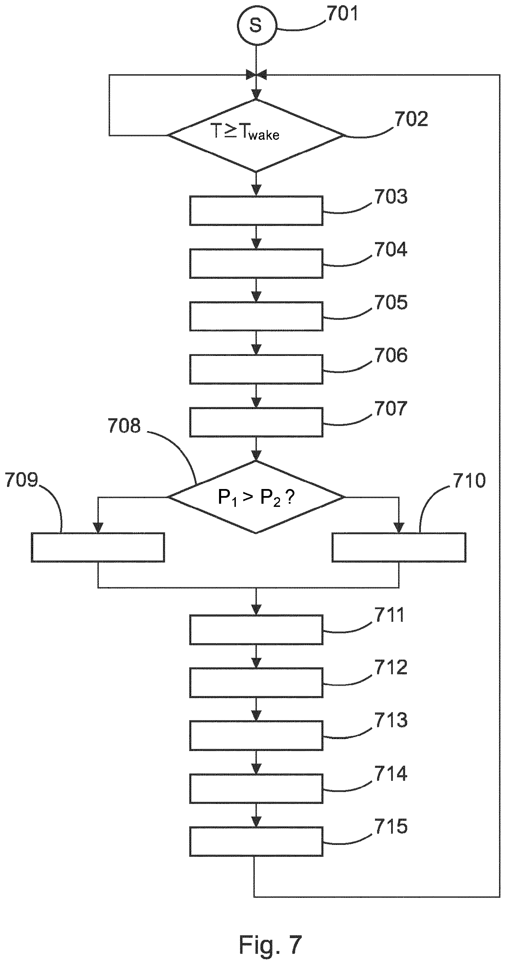

Fig. 7 zeigt ein Flussdiagramm eines Verfahrens mittels eines autarken Sensors 101, 501 zum Detektieren eines Füllstands oder eines Grenzstands oder eines Drucks zumindest eines Mediums 106 in einem Transportbehälter 102, 601.

Das Verfahren beginnt mit dem Startzustand im ersten Schritt 701, in welchem ein autarken Sensors 101, 501, der ein geschlossenes Gehäuse 206 und eine Sensorelementeanordnung mit einem oder mehreren Sensorelementen 204, 205 aufweist, zum Aufliegen auf dem Boden des Behälters bereitgestellt und angeordnet wird. Die Sensorelementeanordnung weist beispielsweise zwei Sensorelemente auf, die ein erstes Drucksensorelement 204 und ein zweites Drucksensorelement 205 und sind und im dem Gehäuse 206 des autarken Sensors 101, 501 gegenüber voneinander angeordnet sind. Im Schritt 702 wird die Messung beim Aktivieren des autarken Sensors 101, 501 durch eine interne Energieversorgung 201 in einem vorgegebenen Zeitabstand mittels eines Zeitgebers 301 ausgeführt. Dazu wird überprüft, ob die aktuelle Zeit T des Zeitgebers 301 größer oder gleich der nächsten, vorab parametrierten Aufweckzeit T_{Wake} ist. Ist dies der Fall, so wird im Schritt 703 die Auswerteeinrichtung 202 oder der Prozessor 202 mit Energie versorgt, und das Programm geladen. Im Schritt 704 wird ein erster Messwert bzw. ein erster Druckwert P₁ mittels des ersten Drucksensorelements 204 ermittelt. Im Schritt 705 wird ein zweiter Messwert bzw. ein zweiter Druckwert P₂ mittels des zweiten Drucksensorelements 205 ermittelt. Im Schritt 706 wird ein Neigungswinkel mittels eines Neigungssensorelements 304 des autarken Sensors 101, 501 ausgelesen. Im Schritt 707 wird die Dichte ρ des umgebenden Mediums 106, 502 bestimmt.

Im Schritt 708 wird durch einen Vergleich der ersten und zweiten Messwerte P₁ und P₂ überprüft, ob der autarke Sensor aufrecht oder kopfüber steht und ob das erste Drucksensorelement 204 und das zweite Drucksensorelement 205 auf unterschiedlichen Höhenlagen angeordnet sind bzw. ob P₁ > P₂ oder P₁ > P₂. In den Schritten 709, 710 wird anhand der ersten und zweiten Messwerte der dem Behälterboden 109 zugewandten Drucksensorelemente 204, 205 ein dritter Messwert, beispielsweise der Füllstand h, mittels einer Auswerteeinrichtung 202 ermittelt. Im Falle von P₁ = P₂, kann der Sensor eingerichtet sein, den Füllstand h des Mediums anhand eines der ersten und zweiten Druckwerte zu ermitteln. Alternativ oder zusätzlich kann der Sensor eingerichtet sein, aufgrund der gleichen Höhenlage der ersten und zweiten Drucksensorelemente keine Dichtemessung mehr auszuführen. Der Sensor kann folglich eingerichtet sein, eine Fehlermeldung auszugeben, einen zuletzt bekannten Dichtewert zu verwenden und/oder einen vorab parametrierten Dichtewert für die Bestimmung des Füllstandes h heranzuziehen. Bleibt der autarke Sensor schräg liegen, kann beispielsweise der Füllstand unter Berücksichtigung der resultierende Höhendifferenz dᵣₑₛ aus dem bekannten Abstand d zwischen den ersten und zweiten Drucksensorelementen 204, 205 und des Neigungswinkels ermittelt werden und somit die Messgenauigkeit verbessert werden.

Nach dem Aktivieren der Kommunikationseinrichtung 203 im Schritt 711 wird im Schritt 712 der Füllstand drahtlos nach außen übertragen, wobei das Funksignal hierbei das umgebende Medium 106 zumindest partiell durchläuft. Im Schritt 713 wird die Kommunikationseinrichtung deaktiviert, bevor im Schritt 714 der Prozessor oder die Auswerteeinrichtung 202 den Zeitpunkt der nächsten Messung an den Zeitgeber 301 überträgt.

Im Schritt 715 wird das schaltende Element 303 vom dem Prozessor 202 wieder geöffnet, wodurch das komplette System mit Ausnahme des Zeitgebers 301 wieder deaktiviert wird und somit den Zustand maximaler Energieeinsparung einnimmt. Hierdurch kann die Lebensdauer der Batterie 201 oder des Akkus 201 maximiert werden, was es insbesondere ermöglichen kann, den autarken Sensor 101 mit einer festeingebauten Batterie, welche den Betrieb während vieler Jahre ermöglicht, auszuführen. Hierdurch können vorteilhaft die Herstellung vereinfacht, die Kosten während der Fertigung und während des Betriebes reduziert und die Dichtigkeit des Sensorgehäuses 206 auf einfache Weise sichergestellt werden.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Autarker Sensor (101, 501), eingerichtet zum Detektieren eines Füllstands, eines Grenzstands oder eines Drucks zumindest eines Mediums (106) in einem Transportbehälter (102, 601), aufweisend:
ein geschlossenes Gehäuse (206), welches zum Untertauchen in dem zumindest einen Medium eingerichtet ist;
eine Sensorelementeanordnung mit einem oder mehreren Sensorelementen (204, 205), die in oder an dem Gehäuse angeordnet sind;
wobei der Sensor (101, 501) zum Absinken in dem zumindest einen Medium und zum Aufliegen auf dem Boden (109) des Behälters ausgeführt ist, ohne Befestigung an dem Behälter;
**dadurch gekennzeichnet, dass**
der autarke Sensor (101, 501) derart ausgebildet ist, dass seine Außenform und Gewichtsverteilung dazu führt, dass er nach Absinken in dem zumindest einen Medium (106) eine Standposition ohne Befestigung an dem Transportbehälter (102, 601) einnimmt, in welcher zumindest eines der Sensorelemente (204, 205) ungehindert von der Behälterwand messen kann und ein unkontrolliertes Ablösen während eines Transportes verhindert werden kann.

2. Autarker Sensor (101, 501) nach Anspruch 1,
wobei die Dichte des Sensors zwischen der Dichte von Wasser und der Dichte von einem Öl liegt.

3. Autarker Sensor (101, 501) nach Anspruch 1 oder 2,
wobei die Sensorelementeanordnung zwei Sensorelemente (204, 205) aufweist, die gegenüber voneinander angeordnet sind.

4. Autarker Sensor (101, 501) nach Anspruch 3,
wobei die beiden Sensorelemente ein erstes Drucksensorelement (204) und ein zweites Drucksensorelement (205) sind;
wobei das erste Drucksensorelement zum Ermitteln eines ersten Messwertes ist und das zweite Drucksensorelement zum Ermitteln eines zweiten Messwertes des zumindest einen Mediums eingerichtet ist.

5. Autarker Sensor (101, 501) nach Anspruch 4, weiterhin aufweisend:
eine Auswerteeinrichtung (202), die in dem Gehäuse angeordnet ist und zur Ermittlung eines dritten Messwertes anhand des ersten Messwertes und/oder des zweiten Messwertes eingerichtet ist.

6. Autarker Sensor (101, 501) nach einem der vorhergehenden Ansprüche, weiterhin aufweisend:
eine Kommunikationseinrichtung (203), die in dem Gehäuse angeordnet und dazu eingerichtet ist, einen ermittelten Messwert drahtlos durch das Gehäuse hindurch nach außen zu übertragen.

7. Autarker Sensor (101, 501) nach Anspruch 6,
wobei die Kommunikationseinrichtung (203) dazu eingerichtet ist, das Funksignal mittels LPWAN oder einer Long Range Schmalbandfunktechnologie mit einer Funkfrequenz unterhalb von 1 GHz auszusenden.

8. Autarker Sensor (101, 501) nach Anspruch 6 oder 7, weiterhin aufweisend:
ein Gateway (602), das dazu eingerichtet ist, an dem Behälter (102, 601) angeordnet zu sein und das Funksignal von der Kommunikationseinrichtung (203) zu empfangen und an einen behälterexternen Empfänger (507) zu übertragen.

9. Autarker Sensor (101, 501) nach einem der vorhergehenden Ansprüche, weiterhin aufweisend:
eine Energieversorgung (201), die in dem Gehäuse angeordnet und dazu eingerichtet ist, durch einen Zeitgeber (301), angeordnet in dem Gehäuse, in einem vorgegebenen Zeitabstand aktiviert zu werden.

10. Autarker Sensor (101, 501) nach einem der vorhergehenden Ansprüche, weiterhin aufweisend:
ein Neigungssensorelement (304), das in dem Gehäuse (206) angeordnet und dazu eingerichtet ist, die Neigung des autarken Sensors zu bestimmen.

11. Verwendung eines autarken Sensors (101, 501) nach einem der Ansprüche 1 bis 10 zum Detektieren eines Füllstands oder eines Grenzstands oder eines Drucks zumindest eines Mediums (106) in einem Transportbehälter (102, 601).

12. Verwendung eines autarken Sensors (101, 501) nach Anspruch 11,
wobei der Transportbehälter (102, 601) ein Fahrzeugtank ist.

13. Verwendung eines autarken Sensors (101, 501) nach einem der Ansprüche 1 bis 10 zum Detektieren eines Füllstands oder eines Grenzstands oder eines Drucks für die Grundwasserpegelmessung.

14. Autarkes Füllstand-, Grenzstand- oder Druckmesssystem aufweisend:
einen ersten autarken Sensor (101) nach einem der Ansprüche 1 bis 10; und
einen zweiten autarken Sensor (501) nach einem der Ansprüche 1 bis 10;
wobei der erste autarke Sensor eine andere Dichte aufweist als der zweite autarke Sensor.

15. Autarkes Füllstand-, Grenzstand- oder Druckmesssystem gemäß Anspruch 14, weiterhin aufweisend:
einen Grenzstandsensor (606), eingerichtet zur Befestigung seitlich an der Innenwand des Behälters (102, 601) und zur Ausgabe eines Warnsignals nach außen.

16. Verfahren zum Detektieren eines Füllstands oder eines Grenzstands oder eines Drucks zumindest eines Mediums (106) in einem Transportbehälter (102, 601), aufweisend die Schritte:
Bereitstellen und Anordnen (701) eines autarken Sensors (101, 501), der ein geschlossenes Gehäuse (206) und eine Sensorelementeanordnung mit einem oder mehreren Sensorelementen (204, 205) aufweist, zum Absinken in dem zumindest einen Medium und zum Aufliegen auf dem Boden des Behälters ohne Befestigung an dem Behälter, wobei die Sensorelementeanordnung zwei Sensorelemente aufweist, die ein erstes Drucksensorelement (204) und ein zweites Drucksensorelement (205) und im dem Gehäuse des autarken Sensors gegenüber voneinander angeordnet sind, wobei der autarke Sensor (101, 501) derart ausgebildet ist, dass seine Außenform und Gewichtsverteilung dazu führt, dass er nach Absinken in dem zumindest einen Medium (106) eine Standposition ohne Befestigung an dem Transportbehälter (102, 601) einnimmt, in welcher zumindest eines der Sensorelemente (204, (205) ungehindert von der Behälterwand messen kann und ein unkontrolliertes Ablösen während eines Transportes verhindert werden kann;
Ausführen (702) der Messung beim Aktivieren des autarken Sensors (101, 501) durch eine interne Energieversorgung (201) in einem vorgegebenen Zeitabstand mittels eines Zeitgebers (301).

17. Verfahren nach Anspruch 16, weiterhin aufweisend die Schritte:
Ermitteln (704) eines ersten Messwertes des zumindest einen Mediums mittels des ersten Drucksensorelements (204);
Ermitteln (705) eines zweiten Messwertes des zumindest einen Mediums mittels des zweiten Drucksensorelements (205);
Ermitteln (709, 710) eines dritten Messwertes mittels einer Auswerteeinrichtung (202) anhand des ersten Messwertes und/oder des zweiten Messwertes.

18. Programmelement, das, wenn es auf einem Prozessor (202) eines autarken Sensors (101, 501) ausgeführt wird, den autarken Sensor anweist, die Schritte des Verfahrens nach Anspruch 16 oder 17 durchzuführen.

19. Computerlesbares Medium, auf dem ein Programmelement nach Anspruch 18 gespeichert ist.

## Claims

1. Self-sufficient sensor (101, 501), configured for detecting a fill level, a limit level or a pressure of at least one medium (106) in a transport container (102, 601), comprising:
a closed housing (206), which is configured to immerse in the at least one medium;
a sensor element arrangement with one or more sensor elements (204, 205) arranged in or on the housing;
wherein the sensor (101, 501) is configured to sink into the at least one medium and to rest on the bottom (109) of the container, without attaching to the container;
**characterized in that** the self-sufficient sensor (101, 501) is designed in such a way that its external shape and weight distribution result in it assuming a standing position without attaching to the transport container (102, 601) after sinking into the at least one medium (106), in which position at least one of the sensor elements (204, 205) can measure unhindered by the container wall and uncontrolled detachment during transport can be prevented.

2. Self-sufficient sensor (101, 501) according to claim 1,
where the density of the sensor is between the density of water and the density of an oil.

3. Self-sufficient sensor (101, 501) according to claim 1 or 2,
wherein the sensor element arrangement comprises two sensor elements (204, 205) arranged opposite to each other.

4. Self-sufficient sensor (101, 501) according to claim 3,
wherein the two sensor elements are a first pressure sensor element (204) and a second pressure sensor element (205);
wherein the first pressure sensor element is configured to determine a first measuring value and the second pressure sensor element is configured to determine a second measuring value of the at least one medium.

5. Self-sufficient sensor (101, 501) according to claim 4, further comprising:
an evaluation device (202), which is arranged in the housing and is configured to determine a third measuring value on the basis of the first measuring value and/or the second measuring value.

6. Self-sufficient sensor (101, 501) according to one of the preceding claims, further comprising:
a communication device (203), which is arranged in the housing and is configured to transmit a determined measuring value wirelessly through the housing to the outside.

7. Self-sufficient sensor (101, 501) according to claim 6,
wherein the communication device (203) is configured to transmit the radio signal by means of LPWAN or a long range narrow band radio technology with a radio frequency below 1 GHz.

8. Self-sufficient sensor (101, 501) according to claim 6 or 7, further comprising:
a gateway (602) that is configured to be disposed on the container (102, 601) and to receive the radio signal from the communication device (203) and transmit it to a receiver (507) external to the container.

9. Self-sufficient sensor (101, 501) according to one of the preceding claims, further comprising:
a power supply (201) arranged in the housing and configured to be activated at a predetermined time interval by a timer (301) arranged in the housing.

10. Self-sufficient sensor (101, 501) according to one of the preceding claims, further comprising:
an inclination sensor element (304) arranged in the housing (206) and configured to determine the inclination of the stand-alone sensor.

11. Use of a self-sufficient sensor (101, 501) according to one of claims 1 to 10 for detecting a fill level or a limit level or a pressure of at least one medium (106) in a transport container (102, 601).

12. Use of a self-sufficient sensor (101, 501) according to claim 11,
wherein the transport container (102, 601) is a vehicle tank.

13. Use of a self-sufficient sensor (101, 501) according to one of claims 1 to 10 for detecting a fill level or a limit level or a pressure for groundwater level measurement.

14. Self-sufficient fill level, limit level or pressure measuring system:
a first self-sufficient sensor (101) according to one of claims 1 to 10; and
a second self-sufficient sensor (501) according to one of claims 1 to 10;
wherein the first self-sufficient sensor has a different density than the second self-sufficient sensor.

15. Self-sufficient fill level, limit level or pressure measuring system according to claim 14, further comprising:
a limit level sensor (606), configured to attach to the side of the inner wall of the container (102, 601) and to output a warning signal to the outside.

16. Method for detecting a fill level or a limit level or a pressure of at least one medium (106) in a transport container (102, 601), comprising the steps:
providing and arranging (701) a self-sufficient sensor (101, 501) comprising a closed housing (206) and a sensor element arrangement with one or more sensor elements (204, 205) for sinking in the at least one medium and for resting on the bottom of the container without attaching to the container, wherein the sensor element arrangement comprises two sensor elements which are a first pressure sensor element (204) and a second pressure sensor element (205) and are arranged opposite each other in the housing of the self-sufficient sensor, the self-sufficient sensor (101, 501) being designed in such a way that its external shape and weight distribution result in it assuming a standing position without attaching to the transport container (102, 601) after sinking into the at least one medium (106), in which position at least one of the sensor elements (204, (205) can measure unhindered by the container wall and uncontrolled detachment during transport can be prevented;
performing (702) the measurement when activating the self-sufficient sensor (101, 501) by an internal power supply (201) at a predetermined time interval by means of a timer (301).

17. Method according to claim 16, further comprising the steps of:
determining (704) a first measuring value of the at least one medium by means of the first pressure sensor element (204);
determining (705) a second measuring value of the at least one medium by means of the second pressure sensor element (205);
determining (709, 710) a third measuring value by means of an evaluation device (202) using the first measuring value and/or the second measuring value.

18. Program element which, when executed on a processor (202) of a self-sufficient sensor (101, 501), instructs the self-sufficient sensor to perform the steps of the method according to claim 16 or 17.

19. Computer-readable medium, on which a program element according to claim 18 is stored.

## Revendications

1. Capteur autonome (101, 501), configuré pour détecter un niveau de remplissage, un niveau limite ou une pression d'au moins un milieu (106) dans un contenant de transport (102, 601), comprenant :
un boîtier fermé (206) qui est configuré pour être immergé dans le au moins un milieu ;
un agencement d'éléments de capteur ayant un ou plusieurs éléments de capteur (204, 205) qui sont agencés dans ou sur le boîtier ;
dans lequel le capteur (101, 501) est conçu pour descendre dans le au moins un milieu et reposer sur le fond (109) du contenant, sans être fixé au contenant ;
**caractérisé en ce que** le capteur autonome (101, 501) est réalisé de telle sorte que sa forme extérieure et sa répartition de poids ont pour résultat qu'après être descendu dans le au moins un milieu (106), il prend une position debout sans être fixé au contenant de transport (102, 601), dans laquelle au moins un des éléments de capteur (204, 205) peut effectuer librement une mesure à partir de la paroi de contenant et un détachement non contrôlé peut être empêché pendant le transport.

2. Capteur autonome (101, 501) selon la revendication 1,
dans lequel la densité du capteur se situe entre la densité de l'eau et la densité d'une huile.

3. Capteur autonome (101, 501) selon la revendication 1 ou 2, dans lequel l'agencement d'éléments de capteur comprend deux éléments de capteur (204, 205) qui sont agencés l'un en face de l'autre.

4. Capteur autonome (101, 501) selon la revendication 3,
dans lequel les deux éléments de capteur sont un premier élément de capteur de pression (204) et un second élément de capteur de pression (205) ;
dans lequel le premier élément de capteur de pression est destiné à déterminer une première valeur mesurée et le second élément de capteur de pression est configuré pour déterminer une deuxième valeur mesurée du au moins un milieu.

5. Capteur autonome (101, 501) selon la revendication 4, comprenant en outre :
un dispositif d'évaluation (202) qui est agencé dans le boîtier et est configuré pour déterminer une troisième valeur mesurée sur la base de la première valeur mesurée et/ou de la deuxième valeur mesurée.

6. Capteur autonome (101, 501) selon l'une des revendications précédentes, comprenant en outre :
un dispositif de communication (203) qui est agencé dans le boîtier et est configuré pour transmettre vers l'extérieur, de manière sans fil, une valeur mesurée déterminée à travers le boîtier.

7. Capteur autonome (101, 501) selon la revendication 6, dans lequel le dispositif de communication (203) est configuré pour émettre le signal radio au moyen d'un LPWAN ou d'une technologie radio à bande étroite longue portée avec une fréquence radio inférieure à 1 GHz.

8. Capteur autonome (101, 501) selon la revendication 6 ou 7, comprenant en outre :
une passerelle (602) qui est configurée pour être placée sur le contenant (102, 601) et pour recevoir le signal radio du dispositif de communication (203) et pour le transmettre à un récepteur (507) externe au contenant.

9. Capteur autonome (101, 501) selon l'une des revendications précédentes, comprenant en outre :
une alimentation en énergie (201) qui est agencée dans le boîtier et est configurée pour être activée par une horloge (301), agencée dans le boîtier, à un intervalle de temps prédéterminé.

10. Capteur autonome (101, 501) selon l'une des revendications précédentes, comprenant en outre :
un élément de capteur d'inclinaison (304) qui est agencé dans le boîtier (206) et est configuré pour déterminer l'inclinaison du capteur autonome.

11. Utilisation d'un capteur autonome (101, 501) selon l'une des revendications 1 à 10 pour détecter un niveau de remplissage ou un niveau limite ou une pression d'au moins un milieu (106) dans un contenant de transport (102, 601).

12. Utilisation d'un capteur autonome (101, 501) selon la revendication 11,
dans lequel le contenant de transport (102, 601) est un réservoir de véhicule.

13. Utilisation d'un capteur autonome (101, 501) selon l'une des revendications 1 à 10 pour détecter un niveau de remplissage ou un niveau limite ou une pression pour la mesure du niveau de nappe phréatique.

14. Système autonome de mesure de niveau de remplissage, de niveau limite ou de pression comprenant :
un premier capteur autonome (101) selon l'une des revendications 1 à 10 ; et
un second capteur autonome (501) selon l'une des revendications 1 à 10 ;
dans lequel le premier capteur autonome a une densité différente du second capteur autonome.

15. Système autonome de mesure de niveau de remplissage, de niveau limite ou de pression selon la revendication 14, comprenant en outre :
un capteur de niveau limite (606), configuré pour être fixé latéralement à la paroi intérieure du contenant (102, 601) et pour émettre un signal d'avertissement vers l'extérieur.

16. Procédé pour détecter un niveau de remplissage ou un niveau limite ou une pression d'au moins un milieu (106) dans un contenant de transport (102, 601), comprenant les étapes consistant à :
fournir et agencer (701) un capteur autonome (101, 501) qui comprend un boîtier fermé (206) et un agencement d'éléments de capteur ayant un ou plusieurs éléments de capteur (204, 205), destiné à descendre dans le au moins un milieu et à reposer sur le fond du contenant sans être fixé au contenant, dans lequel l'agencement d'éléments de capteur comprend deux éléments de capteur qui sont un premier élément capteur de pression (501) et un second élément de capteur de pression (205) et qui sont agencés l'un en face de l'autre dans le boîtier du capteur autonome, dans lequel le capteur autonome (101, 501) est réalisé de telle sorte que sa forme extérieure et sa répartition de poids ont pour résultat qu'après être descendu dans le au moins un milieu (106), il prend une position debout sans être fixé au contenant de transport (102, 601), dans laquelle au moins un des éléments de capteur (204, 205) peut effectuer librement une mesure à partir de la paroi de contenant et un détachement non contrôlé peut être empêché pendant un transport ;
réaliser (702) la mesure en activant le capteur autonome (101, 501) par l'intermédiaire d'une alimentation interne en énergie (201) à un intervalle de temps prédéfini au moyen d'une horloge (301).

17. Procédé selon la revendication 16, comprenant en outre les étapes consistant à :
déterminer (704) une première valeur mesurée du au moins un milieu au moyen du premier élément capteur de pression (204) ;
déterminer (705) une deuxième valeur mesurée du au moins un milieu au moyen du second élément capteur de pression (205) ;
déterminer (709, 710) une troisième valeur mesurée au moyen d'un dispositif d'évaluation (202) sur la base de la première valeur mesurée et/ou de la deuxième valeur mesurée.

18. Élément de programme qui, lorsqu'il est exécuté sur un processeur (202) d'un capteur autonome (101, 501), ordonne au capteur autonome de mettre en œuvre les étapes du procédé selon la revendication 16 ou 17.

19. Support lisible par ordinateur sur lequel est stocké un élément de programme selon la revendication 18.
